# EUROPEAN PATENT APPLICATION

(11) **EP 3 517 757 A1**
(43) Date of publication of application: **31.07.2019**
(21) Application number: 18154122.8
(22) Date of filing: 30.01.2018
(51) Int. Cl.: F02C 3/22, F02C 6/18

(54) **METHOD FOR OPERATING A POWER DEVICE AND POWER DEVICE**

(71) Applicant: Siemens Aktiengesellschaft, 80333 München (DE)
(72) Inventor: Andersson, Mats, 60234 Norrköping (SE); Larfeldt, Jenny, 61237 Finspång (SE); Larsson, Anders, 61013 Lotorp (SE); Persson, Magnus, 60580 Svärtinge (SE)

(57) **Abstract**

The invention relates to a method for operating a power device (1), the power device (1) comprises a gas turbine (2) and an exhaust gas system (3) for treatment of exhaust gas, wherein the gas turbine (2) comprises a combustion chamber (5) and a turbine (6), the gas turbine (2) is at least configured for co-firing hydrogen and/or ammonia, wherein the hydrogen and/or the ammonia is supplied by an ammonia system (8), comprising the steps of:
a) providing the ammonia in the ammonia system (8),
b) heating the ammonia in the ammonia system (8) with heat from the power device (1) to decompose the ammonia completely or partly into nitrogen and hydrogen,
c) injecting at least the hydrogen and/or the nitrogen, and/or the remaining ammonia into the combustion chamber (5) of the gas turbine (2),
d) combusting at least the hydrogen and/or the nitrogen, and/or the remaining ammonia in the combustion chamber (5) of the gas turbine (2),
e) treating the exhaust gas of the combustion chamber (5) with ammonia from the ammonia system (8) to remove at least nitrogen oxides from the exhaust gas of the combustion chamber (5).

## Description

The invention relates to a method for operating a power device and to a power device.

A power device, which is designed to combust fuel, comprises a gas turbine with a compressor, a combustion chamber and a turbine. Conventional fuels like natural gas, diesel, or landfill gas are generally combusted in the combustion chamber with the compressed air from the compressor. The heated and compressed air will drive the turbine which drives the compressor and a generator which generates electric power. Those conventional fuels contain carbon and during the combustion of these fuels carbon dioxide and other environmentally unfriendly substances are emitted. The carbon dioxide pollutes the environment and is jointly responsible for the climate change. Conventional fuels are thus not environmentally friendly.

Ammonia is a carbon free fuel and already established on the world market as raw material for various chemicals, and could also be used as a fuel in gas turbines. Ammonia as a fuel has approximately one third of the heating value of natural gas and a lower flame speed. The operation of the gas turbine with ammonia can result in a flashback that can lead to unsafe behaviour of the gas turbine like a flame burning on the burner surface, a flameout, combustion dynamics that effects the integrity of the gas turbine, a high pressure drop that leads to a performance loss, or high unhealthy emissions, for example high emissions of nitrogen oxides.

It is an object of the present invention to provide a method for operating a power device and to provide a power device, wherein the power device can be operated with a carbon free fuel like ammonia in a safe and environmentally friendly manner.

The object is solved by the features of the patent claim 1 and 14. Preferred embodiments thereto are given in the further patent claims.

The method according to the invention for operating a power device, wherein the power device comprises a gas turbine and an exhaust gas system for treatment of exhaust gas, wherein the gas turbine comprises a combustion chamber and a turbine, the gas turbine is at least configured for co-firing hydrogen and/or ammonia, wherein the hydrogen and/or the ammonia is supplied by an ammonia system, comprises the steps of: a) providing the ammonia in the ammonia system, b) heating the ammonia in the ammonia system with heat from the power device to decompose the ammonia completely or partly into nitrogen and hydrogen, c) injecting at least the hydrogen and/or the nitrogen, and/or the remaining ammonia into the combustion chamber of the gas turbine, d) combusting at least the hydrogen and/or the nitrogen, and/or the remaining ammonia in the combustion chamber of the gas turbine, and e) treating the exhaust gas of the combustion chamber with ammonia from the ammonia system to remove nitrogen oxides from the exhaust gas of the combustion chamber.

The power device is for example a power plant for generating electric power for an electric grid or a power unit located on a ship or an oil rig for generating electric power for the ship or the oil rig. It is also possible that the power device is used to drive other machines. The gas turbine could be a single shaft gas turbine or a multiple shaft gas turbine. The combustion chamber is generally located between a compressor and the turbine and the fuel is injected and combusted in combination with compressed air, provided from the compressor, in the combustion chamber. The ammonia system supplies the ammonia. The supplied ammonia is used for the decomposition into hydrogen and nitrogen and also for treating the exhaust gas from the combustion chamber, for example to remove nitrogen oxides.

When ammonia is heated it decomposes into nitrogen and hydrogen in the volumetric split 25/75 %. According to the invention the required heat to decompose the ammonia into hydrogen and nitrogen is provided by the power device itself, for example by heat from parts of the gas turbine. In conventional power devices heat from the combustion chamber, for example waste heat remains unused, according to the invention this heat is used to decompose the ammonia. It is also possible that the required heat for decomposing the ammonia is supplied by heat from the exhaust gas system or other parts of the power device. The ammonia system could for example comprise a decomposition unit to decompose the ammonia into hydrogen and nitrogen and the decomposition unit is supplied with heat by the combustion chamber, the turbine or other parts of the power device.

According to the invention the fuel injected into the combustion chamber could comprise conventional fuel, ammonia, hydrogen and nitrogen. By controlling the decomposition unit or the decomposition process it is possible to control the share of ammonia, hydrogen and nitrogen which is injected into the combustion chamber. The low reactivity of ammonia compared to natural gas may be compensated by addition of hydrogen which has a very high flame speed. By controlling the share of ammonia and hydrogen it is possible to control combustion properties like flame speed or combustion temperatures. Because of that, it is possible to avoid flashbacks that can lead to a flame burning on the combustion chamber surface, a flameout or high pressure drops. Controlling the decomposition process offers thus a safe way to operate the power device with ammonia. It is also possible to monitor the combustion properties and to control the decomposition process according to the monitored combustion properties. In this case the decomposition process and the combustion process are automated.

Additionally it is possible to inject ammonia from the ammonia system into the exhaust gas. By injecting ammonia from the ammonia system it is possible to bind and remove environmental unfriendly nitrogen oxides from the exhaust gas of the combustion chamber.

The ammonia system is thus responsible for feeding at least a share of the fuel, ammonia and/or hydrogen, into the combustion chamber and to bind and to remove environmental unfriendly nitrogen oxides from the exhaust gas of the combustion chamber. Ammonia and hydrogen are carbon free fuels, by injecting them into the combustion chamber and by combusting them a lower amount of carbon dioxides is released into the environment, instead if only conventional fuels, like methane, are combusted. Thus the method according to the inventions offers a way to reduce the release of carbon dioxide, to bind and remove nitrogen oxides from the exhaust gas und to save energy during the decomposition process of ammonia into hydrogen and nitrogen by using the heat from the power device. Because of that the method according to the invention offers a way to operate the power device safe and environmentally friendly.

It is preferred that the ammonia is decomposed partially or completely using at least one catalyst of the exhaust gas system. The exhaust gas system is configured to guide the exhaust gas from the combustion chamber to the chimney and for the treatment of the exhaust gas of the combustion chamber. Thus, a pipe system of the exhaust gas system starts in the combustion chamber and ends in a chimney where the exhaust gas is released to the environment. In the power device the exhaust gas passes different parts like the turbine or a Selectiv Catalytic Reactor System (SCR-System) and/or catalysts. The catalysts are used to remove harmful substances like hydrocarbons or nitrogen oxides from the exhaust gas. To remove the harmful substances the catalysts operate at high temperatures. The required heat to operate at this high temperatures is provided by the exhaust gas itself, which has still the necessary temperature. It is preferred that this heat is not only used to heat up the catalyst but also to decompose the ammonia from the ammonia system partly or completely. It is possible that the heat from the exhaust gas is used to heat up at least an ammonia catalyst to decompose the ammonia in the ammonia catalyst. The ammonia catalyst allows this reaction to occur at a lower temperature. The temperatures of the exhaust gas surrounding the ammonia catalyst is high enough to decompose the ammonia in the ammonia catalyst. The ammonia catalyst is thus a part of the decomposition unit. It is also possible that some share of the ammonia from the ammonia system which is guided through the ammonia catalyst is injected into the exhaust gas to bind harmful substances. It is also possible that the heat from the exhaust gas is used to heat up the ammonia catalyst to bind harmful substances on the outside and to decompose the ammonia on the inside. So the ammonia catalyst could be used to treat the exhaust gas, to decompose the ammonia and to inject some ammonia into the exhaust gas. This reduces losses, helps to increase the efficiency of the power device and reduces the necessary parts of the power device. Other catalysts in the SCR-system could be provided to bind harmful substances.

It is also possible that the power device comprises at least one heat exchanger which is located in the exhaust gas system and where the exhaust gas transfers its heat to a media and that this media heats the ammonia for the decomposition process. A heat exchanger could also be used for this purpose. The media could also be a share of the exhaust gas itself. It is also possible that the heat from the exhaust gas is transferred directly to the ammonia in the heat exchanger.

It is preferred that the required heat for decomposing the ammonia is provided partially or completely from the turbine of the gas turbine. The temperatures of the exhaust gas in the turbine are higher than in the parts of the power device which are located downstream of the turbine. Such high temperatures can be used to decompose the ammonia into hydrogen and nitrogen. Because of that it is preferred that the heat for decomposing the ammonia is provided partially or completely from the turbine. It is possible that a heat exchanger is arranged on the housing of the turbine and that heat from the housing of the turbine is transferred to a media and that this media transfers the heat to the ammonia system to decompose the ammonia. It is also possible that the ammonia directly passes the heat exchanger which is located at the turbine housing. It could be also possible that a share of the exhaust gas is guided to the ammonia system to heat at least a share of the ammonia.

The turbine is exposed to high temperatures and it could be necessary to remove heat from different parts of the turbine to ensure a safe operation of the whole gas turbine. This can be achieved by removing this heat from those critical parts with the media or with ammonia directly. The media could also be a share of the exhaust gas itself. So the heat is transferred from parts of the turbine where the heat should be removed to parts of the power device like the decomposition unit where the heat is required. This offers the possibility to solve the above described two problems with one aspect of the present invention. This helps to reduce losses and to enhance the efficiency of the power device.

It is preferred that the required heat for decomposing the ammonia is provided partially or completely from an outlet area, which is located between the combustion chamber and the turbine. The outlet area is the area of the gas turbine between the combustion chamber and the turbine. It is also possible that the outlet area comprises a part of the combustion chamber and/or the inlet of the turbine. At this area the exhaust gas of the combustion chamber has its maximum temperature and the requirements of the used materials in this area are extremely high. It could be necessary to cool some parts of this outlet area of the gas turbine with cooling medium. According to the invention it is preferred that the removed heat from this outlet area is used to heat the ammonia completely or partly in the decomposition process. It is for example possible to arrange at least one heat exchanger on the housing of the outlet area. Also here it is possible to solve two problems with one aspect of the present invention, namely cooling critical parts of the outlet area and providing the required heat for decomposing the ammonia. The media for transferring the heat to the decomposition process could also be a share of the exhaust gas itself.

It is also possible that the required heat for decomposing the ammonia is provided partially or completely from the combustion chamber. It could be used a heat exchanger which is arranged on the combustion chamber or the media for transferring the heat to the decomposition process could also be a share of the exhaust gas itself. Other options to transfer heat from the combustion chamber are also possible.

It is also possible that the required heat for decomposing the ammonia is provided partially from other parts of the power device. As well it is possible that the required heat is provided partly by a source of heat of the power device which is intended only for this purpose. Such a source could be a burner, fed with conventional fuel, or an electric heat generating system. Such an electric heat generating system could also be fed with electric power generated by the generator of the power device. This creates the possibility to control the decomposition process easily, and is probably used during the ramp up process of the gas turbine.

It is preferred that the exhaust gas of the combustion chamber is at least treated with at least some of the remaining ammonia in the combustion chamber. The remaining ammonia is preferred injected with the decomposed hydrogen and nitrogen. During the decomposing process ammonia is decomposed into hydrogen and nitrogen. But it is also possible that a share of the ammonia is not decomposed and remains as ammonia. According to this invention it is preferred that this remaining ammonia is injected into the combustion chamber to treat the exhaust gas of the combustion chamber already in the combustion chamber. Because of that the ammonia injected into the combustion chamber treats the exhaust gas immediately after or even during the combustion process. This gives the opportunity to bind the harmful substances like nitrogen oxides immediately after their formation. The injection of the remaining ammonia should be controlled such that the remaining ammonia will not combust itself immediately. It is also possible that at least a share of the remaining ammonia is injected into the combustion chamber at a different position than the decomposed products hydrogen and nitrogen. It could be possible that the remaining ammonia is injected into the combustion chamber at a position where the oxygen is almost combusted, so that the ammonia cannot be combusted and is available for binding the harmful substances.

It is also possible that during the decomposition process the ammonia is decomposed completely into hydrogen and nitrogen. If this is the case, it could be necessary to inject additional ammonia, supplied by the ammonia system, into the combustion chamber to bind and to remove harmful substances like nitrogen oxides. During the operation of the power device it is possible to use different fuels like conventional ones and/or new fuels like hydrogen and/or ammonia. If the share of different fuels changes during the operation of the power device it will affect also the exhaust gas and especially the share and the amount of the harmful substances of the exhaust gas. That's why it is useful to control the injected shares of different fuels and to measure and monitor the different shares and amounts of harmful substances in the exhaust gas and to control the amount of additional injected ammonia into the combustion chamber or other parts of the gas turbines which are arranged downstream of the combustion chamber. By monitoring the harmful substances in the exhaust gas it is possible to control or to control automatically the amount of additionally injected ammonia to ensure an environmental friendly operation of the power device even if the shares of different fuels changes during the operation of the power device. This helps to operate the power device environmentally friendly during different operating conditions.

It is preferred that the exhaust gas of the combustion chamber is at least treated with the ammonia from the ammonia system before entering the turbine. As already mentioned above it could be necessary to inject additional ammonia from the ammonia system into the exhaust gas before the exhaust gas enters the turbine. In this stage of the gas turbine mainly the whole combustible substances in the fuel are already combusted, the oxygen in the compressed air is mainly used, the harmful substances are already formed during the combustion and the exhaust gas has a very high temperature. Because of that it is advantageously to inject additional ammonia into the exhaust gas in this stage of the gas turbine to bind harmful substances in the exhaust gas. The amount of the different harmful substances should be monitored to control the injected required amount of the additional ammonia.

It is preferred that the exhaust gas of the combustion chamber is at least treated with the ammonia from the ammonia system while passing the turbine. While passing the turbine the exhaust gas will expand/relax and cool down. In this stage of the gas turbine it could be advantageously to inject additional ammonia from the ammonia system into the turbine to bind harmful substances in the exhaust gas. It is possible that the best temperatures of the exhaust gas to bind harmful substances are reached in the turbine of the gas turbine. If this is the case, it would be advantageously to inject ammonia from the ammonia system into the exhaust gas in the turbine of the gas turbine. Even here the amount of injected ammonia should be controlled or automatically controlled according to the monitored harmful substances in the exhaust gas. This helps to operate the power device environmentally friendly during all operation conditions.

It is also possible that a consequently injection of the ammonia is provided in between different turbine stages. It is also possible that a consequently injection of the ammonia is provided in between guide vanes and rotor blades of one turbine stage. Both measures alone or together create the opportunity to optimize the injection of ammonia at different temperatures of the exhaust gas. The injection of ammonia could be optimized according to the temperature of the exhaust gas during different operation conditions.
It is also possible that the gas turbine comprises a majority of injection devices arranged at different positions and that one or more than one of the injection devices could be selected depending on the load and/or the harmful substances in the exhaust gas. This offers the possibility to inject the ammonia temperature optimized and optimized according to the operation condition of the power device. This helps to operate the power device environmental friendly.

It is also possible that additional substances are injected into the exhaust gas to remove harmful substances.

It is preferred that the exhaust gas of the combustion chamber is at least treated with the ammonia from the ammonia system downstream of the turbine. Downstream of the turbine means the area of the power device where the exhaust gas has to pass through until the exhaust gas is released into the environment. Downstream of the turbine the exhaust gas of the combustion chamber reaches lower temperatures. It could be advantageously to inject ammonia in the exhaust gas at this stage of the power device to bind and remove the harmful substances in the exhaust gas.

It could be that catalysts are used in the exhaust gas system to bind and remove harmful substances in the exhaust gas of the combustion chamber. It could be also advantageously to inject into the exhaust gas ammonia from the ammonia system before the exhaust gas enters the catalyst, while the exhaust gas passes the catalyst and when the exhaust gas has passed the catalyst. The catalyst could also be the ammonia catalyst. Depending on different properties of the exhaust gas and depending on different shares of the harmful substances the injected ammonia should be controlled.

It is preferred that the ammonia from the ammonia system is used to treat the exhaust gas of the combustion chamber in a catalyst. The ammonia can be remaining ammonia or ammonia from the ammonia system. This reduces the environmental footprint of the power device. It is also possible that more than one catalysts are provided in the exhaust gas system and that more than one of the catalysts use ammonia from the ammonia system to bind harmful substances like nitrogen oxides. It is also possible that at least one additional catalyst is placed in the exhaust gas system to bind unburnt und thus harmful substances like carbon monoxides or hydrocarbons.

It is also possible that in the exhaust gas of the power device other substances are additionally or only injected into the exhaust gas of the combustion chamber, for example urea.

It is preferred that the gas turbine is configured to combust mainly conventional fuels like methane and to combust ammonia and/or hydrogen and/or nitrogen in a co-firing manner. Co-firing is the combustion of two or more different types of fuels at the same time. An advantage of co-firing is that an existing power device can be used to combust one or more new fuels. Therefore, the gas turbine is configured to combust multiple types of fuels. According to the invention the new fuels are hydrogen and/or ammonia, which are provided additionally to the conventional used fuels like methane. It is possible that the power device is supplied with mainly conventional fuels like methane and only partly with ammonia, so that ammonia alone could not provide enough energy to operate the power device. If this is the case ammonia and or its decomposed products are used in the power device in a co-firing manner during the whole operation of the power device. But ammonia is a carbon free fuel and even if a small amount of ammonia and/or its decomposed products are combusted in the combustion chamber the carbon footprint of the power device is reduced and helps to achieve climate goals. It is also possible to retrofit consisting power devices with the ammonia system and the other required equipment to co-fire ammonia and/or its decomposed products.

It is preferred that the gas turbine is configured to combust only ammonia and/or hydrogen and/or nitrogen and/or mixtures of at least ammonia and/or hydrogen and/or nitrogen. It is also possible that a whole power device is designed to combust only ammonia and/or its decomposed products. If this is the case, the power device runs completely carbon free during the whole operation of the power device. This creates a carbon free possibility to operate the power device and to generate green electric power. Otherwise, the gas turbine is configured to combust multiple types of fuels, e.g. mixtures of at least ammonia and/or hydrogen and/or nitrogen.

It is preferred that the gas turbine is configured to combust additional hydrogen provided by an additional hydrogen supply system. Hydrogen has a higher heating value than methane and as ammonia. So hydrogen could be used to control the combustion properties in the combustion chamber like flame speed or flame temperature. It is possible that hydrogen is supplied not only via the decomposition of ammonia but also additionally via a separate hydrogen supply system. It is for example possible that hydrogen is produced, via electrolysis, and stored in operation phases of the power device where the whole generated electrical power is not required by consumers. And in case the consumers require a higher amount of electrical power the stored hydrogen can be combusted in the power device and help to provide the required electrical power.

It is preferred that the gas turbine is configured to initially combust mainly conventional fuels like methane and only marginally ammonia and/or hydrogen, and for reducing the conventional fuel share and enhancing the ammonia and/or hydrogen share during operation of the power device. It is advantageously that the power device combusts during its ramp up process mainly conventional fuels like methane and reduces the conventional fuel share slightly and enhances the share of ammonia and/or hydrogen. An existing power device which was originally designed to combust only conventional fuels could be damaged if during the ramp up process the wrong fuel is combusted. In such a case it is advantageously to initially combust mainly the known conventional fuel and to reduce the share of conventional fuel and to enhance the share of the ammonia and/or its decomposed products slowly till a predetermined share. This could preserve the power device and could lead to a longer lifetime of the power device.

The power device could also be operated in different manners, it is possible that the available fuels changes during the operation of the power device. This means that the shares of conventional fuels, ammonia and/or its decomposed products and additional hydrogen or other fuels change during the operation of the power device. This creates a higher availability of the power device. To ensure a constant and/or planned power output of the power device it is required to control the different shares of the different available fuels and to control the combustion properties and the exhaust gas properties.

It is preferred that the share of conventional fuel like methane is reduced to zero during operation of the power device. It is advantageously to reduce the share of conventional fuel to zero during the operation of the power device, this reduces the carbon footprint of the power device.

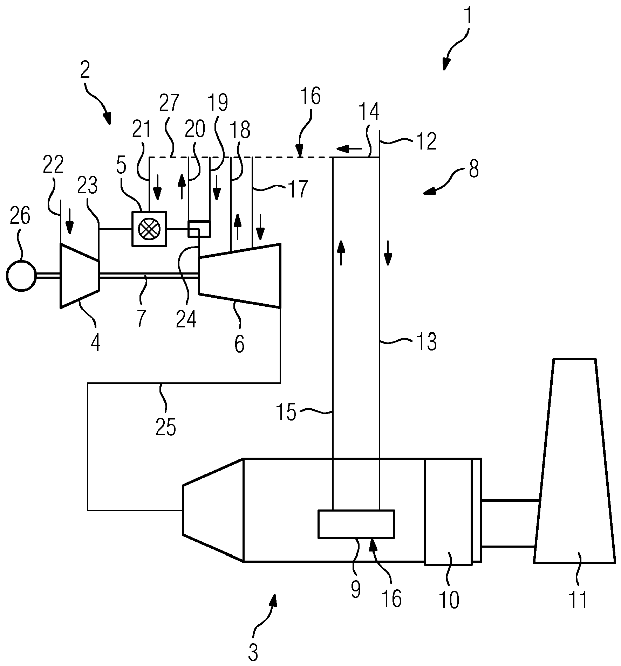

The above mentioned attributes and other features and advantages of this invention and the manner of attaining them will become more apparent and the invention itself will be better understood by reference to the following description of embodiments of the invention taken in conjunction with the following drawing, wherein
The single figure shows a schematic drawing of the power device.

The figure shows a power device 1 which is configured to combust conventional fuels and/or carbon free fuels like ammonia.

The power device 1 comprises a gas turbine 2, a generator 26, an exhaust gas system 3 and an ammonia system 8. The gas turbine 2 comprises a compressor 4, a combustion chamber 5, a turbine 6, a shaft 7, an inlet area 23 and an outlet area 24. Air is provided to the compressor 4 via an air supply 22 and the compressor 4 compresses the air. The compressed air is guided via the inlet area 23 to the combustion chamber 5. In the combustion chamber 5 fuel 21, e.g. methane and/or hydrogen and/or nitrogen and/or ammonia, is injected in the compressed air and combusted together with the compressed air. Thus, the gas turbine 2 is configured for co-firing, e.g. to combust two (or more) different types of fuels. The thus expanded exhaust gas is guided via the outlet area 24 to the turbine 6. In the turbine 6 the combusted fuel 21 and air will decompress/relax and drive the turbine 6. The turbine 6 drives the shaft 7 which drives the compressor 4 and the generator 26. The generator 26 produces electric power which can be supplied to an electric grid. It is also possible that the shaft drives other machines. The exhaust gas leaves the turbine 6 via an exhaust gas line 25 and is guided to some parts of the exhaust gas system 3.

The exhaust gas system 3 comprises an ammonia catalyst 9, a SCR-system 10 and a chimney 11. The exhaust gas heats the ammonia catalyst 9. The SCR-System 10 is additionally used to treat the exhaust gas, harmful substances in the exhaust gas are bonded and removed from the exhaust gas, so that those harmful substances are not released to the environment. The treated exhaust gas is guided to the chimney 11, where the treated exhaust gas is released to the environment. Additionally, a lean nitrogen oxide trap (LNT) may be provided. Moreover, additional catalysts may be provided before or after the SCR-system 10 configured to oxidize and/or bind unburnt substances in the exhaust gas, for example carbon oxides or hydrocarbons.

The ammonia system 8 comprises an ammonia supply line 12 and at least one decomposition unit or decomposition area 16. Additionally the ammonia system 8 comprises a first ammonia catalyst line 13, a first ammonia line 14, a second ammonia catalyst line 15, a first turbine line 17, a second turbine line 18, a first outlet area line 19, a second outlet area line 20, a product line 27 and a fuel line 21. Ammonia is supplied to the ammonia system 8 via the ammonia supply line 12. The ammonia system 8 is configured to guide some share of the ammonia via the first ammonia catalyst line 13 to the ammonia catalyst 9. This share of the ammonia could be decomposed in the ammonia catalyst 9 into nitrogen and hydrogen. The decomposed products could be guided to the combustion chamber 5 using the second ammonia catalyst line 15. If a share of ammonia is decomposed in the ammonia catalyst 9, the ammonia catalyst 9 is at least one part of the decomposition unit 16. Further, the ammonia system 8 is configured to guide the other share of the ammonia via the first ammonia line 14 to the other part of the decomposition area/decomposition unit 16. It is also possible that the ammonia system 8 is configured to guide heat from the ammonia catalyst 9 or other parts of the exhaust gas system 3 to the decomposition area/decomposition unit 16 via the second ammonia catalyst line 15. Additionally, the ammonia system 8 is configured to guide some ammonia via the first turbine line 17 to the turbine 6 of the gas turbine 2 and heat and/or the decomposed products from the turbine 6 via the second turbine line 18 to the decomposition area/decomposition unit 16.

As shown in the figure it is possible that the ammonia system 8 is configured to guide some ammonia via the first outlet area line 19 to the outlet area 24 and heat and/or the decomposed products from the outlet area 24 via the second outlet line 20 to the decomposition area/decomposition unit 16. The heat is transferred from the ammonia catalyst 9, the turbine 6 the outlet area 24 or other parts of the power device 1 using heat exchangers and/or heat transferring mean. It is also possible that the ammonia system 8 is configured to guide the ammonia to those hot parts and to transfer the heat directly to the ammonia and that the ammonia is decomposed in or near those hot parts.

The lines 15, 18, 20 could be for example pipes, which comprise heat transferring media, or heat bridges or other means to transfer the heat from one area to another. Those pipes could also be used to transfer the decomposed ammonia to the combustion chamber 5. The lines 12, 13, 14, 17, 19 could be for example pipes which guide the ammonia.

During the operation of the power device 1 ammonia is supplied to the ammonia system 8 via the ammonia supply line 12.

The decomposition area/decomposition unit 16 decomposes the ammonia completely or partially into the products hydrogen and nitrogen. Those products and/or the remaining ammonia are guided via the product line 27 to the combustion chamber 5 of the gas turbine 2. In the combustion chamber 5 the products of the decomposition area/decomposition unit 16 are combusted together with the compressed air of the compressor 4 and/or additional with conventional fuel supplied via a fuel line 21 and/or additional fuels like hydrogen.

Further, some share of the ammonia could be guided via the first ammonia catalyst line 13 to the catalyst 9 to be injected into the exhaust gas. Some ammonia could be guided via the first turbine line 17 to the turbine 6 of the gas turbine 2 to be injected into the exhaust gas.

Moreover, some ammonia could be guided via the first outlet area line 19 to the outlet area 24 to be injected into the exhaust gas.

It could be also possible that the exhaust gas line 25 is used to guide some remaining ammonia or some additional injected ammonia to at least one catalyst of the exhaust gas system 3.

The ammonia guided, via the lines 13, 17, 19, to the outlet area 24, the turbine 6 and the catalyst 9 could be used to treat the exhaust gas of the combustion chamber 5. By injecting the ammonia into the exhaust gas harmful substances can be bond and removed from the exhaust gas, so that those substances do not harm the environment. The ammonia system 8 supplies the combustion chamber 5 with combustible fuel like ammonia and/or its decomposed products and additionally the ammonia system 8 supplies ammonia for the injection in the exhaust gas of the combustion chamber 5 to bind and to remove harmful substances from the exhaust gas to protect the environment. Ammonia is also a carbon free fuel and helps to reduce the carbon footprint of the power device which helps to protect the environment.

Although the invention is described in detail by the preferred embodiment, the invention is not constrained by the disclosed examples and other variations can be derived by the person skilled in the art, without leaving the extent of the protection of the invention.

## Claims

1. Method for operating a power device (1), the power device (1) comprises a gas turbine (2) and an exhaust gas system (3) for treatment of exhaust gas, wherein the gas turbine (2) comprises a combustion chamber (5) and a turbine (6), the gas turbine (2) is at least configured for co-firing hydrogen and/or ammonia, wherein the hydrogen and/or the ammonia is supplied by an ammonia system (8), comprising the steps of:
a) providing the ammonia in the ammonia system (8),
b) heating the ammonia in the ammonia system (8) with heat from the power device (1) to decompose the ammonia completely or partly into nitrogen and hydrogen,
c) injecting at least the hydrogen and/or the nitrogen, and/or the remaining ammonia into the combustion chamber (5) of the gas turbine (2),
d) combusting at least the hydrogen and/or the nitrogen, and/or the remaining ammonia in the combustion chamber (5) of the gas turbine (2),
e) treating the exhaust gas of the combustion chamber (5) with ammonia from the ammonia system (8) to remove at least nitrogen oxides from the exhaust gas of the combustion chamber (5).

2. Method according to claim 1, wherein the ammonia is decomposed partially or completely using at least one catalyst in the exhaust gas system (3).

3. Method according to claim 1 or 2, wherein the required heat for decomposing the ammonia is provided partially or completely from the turbine (6) of the gas turbine (2).

4. Method according to any of claims 1 to 3, wherein the required heat for decomposing the ammonia is provided partially or completely from an outlet area (24), which is located downstream of the combustion chamber (5) and upstream of the turbine (6).

5. Method according to any preceding claim, wherein the exhaust gas of the combustion chamber (5) is at least treated with the remaining ammonia in the combustion chamber (5).

6. Method according to any preceding claim, wherein the exhaust gas of the combustion chamber (5) is at least treated with the ammonia from the ammonia system (8) after leaving the combustion chamber (5) and before entering the turbine (6) .

7. Method according to any preceding claim, wherein the exhaust gas of the combustion chamber (5) is at least treated with the ammonia from the ammonia system (8) while passing the turbine (6).

8. Method according to any preceding claim, wherein the exhaust gas of the combustion chamber (5) is at least treated with the ammonia from the ammonia system (8) at least downstream of the turbine (6).

9. Method according to any preceding claim, wherein the ammonia from the ammonia system (8) is used to treat the exhaust gas of the combustion chamber (5) in a catalyst.

10. Method according to any preceding claim, wherein the gas turbine (2) is configured to combust mainly conventional fuel.

11. Method according to claim 1 to claim 9, wherein the gas turbine (2) is configured to combust mainly ammonia and/or hydrogen and/or nitrogen and/or mixtures of at least ammonia and/or hydrogen and/or nitrogen.

12. Method according to any preceding claim, wherein the gas turbine (2) is configured to combust additional hydrogen provided by an additional hydrogen supply system.

13. Method according to any preceding claim, wherein the gas turbine (2) is configured to initially combust mainly conventional fuel and a marginal share of ammonia and/or its decomposed products and to reduce the conventional fuel share and enhance the share of ammonia and/or its decomposed products during operation of the power device.

14. Method according to claim 13, wherein the share of conventional fuel is reduced to zero during operation of the power device.

15. Power device (1) which is configured to operate according to any methods described in the preceding claims.
